# EUROPEAN PATENT APPLICATION

(11) **EP 1 641 258 A1**
(43) Date of publication of application: **29.03.2006**
(21) Application number: 05107845.9
(22) Date of filing: 26.08.2005
(51) Int. Cl.: H04N 5/76

(54) **Video recording control device and video recording control method**

(30) Priority: 27.09.2004 JP 2004280691
(71) Applicant: KABUSHIKI KAISHA TOSHIBA, Tokyo 105-8001 (JP)
(72) Inventor: Miyazawa, Akira Toshiba Corporation, 105-8001, Tokyo (JP)
(74) Representative: Henkel, Feiler & Hänzel

(57) **Abstract**

A predetermined video recorder (29, 41, 42) is selected from a plurality of video recorders (29, 41, 42) having a channel selecting function, and when video recording information is set in the selected video recorder (29, 41, 42), the video recorder (29, 41, 42) selects and records a program using the self channel selecting function based on the set video recording information.

## Description

The present invention relates to a video recording control device and a video recording control method which are suitably used in a signal processing apparatus which selects a program from an input signal so as to reproduce it. The invention particularly relates to improvement in the device and the method where a video recorder is connected to the outside and can be controlled.

As publicly known, in recent years, digitalization of television broadcasting is promoted. For example, in Japan, not only satellite digital broadcasting such as BS (broadcasting satellite) digital broadcasting and 110 degree CS (communication satellite) digital broadcasting but also terrestrial digital broadcasting starts.

In digital broadcasting receiving devices that receive such digital television broadcasting, large-capacity digital video recorders such as HDD (hard disk drive) are connected so that received programs can be digitally recorded or recorded programs can be reproduced.

Further, at the present, when a plurality of digital video recorders are connected to one digital broadcasting receiving device so that a network is formed, the digital broadcasting receiving device specifies an arbitrary digital video recorder so as to enable it to record a program, or specifies an arbitrary digital video recorder so as to enable it to reproduce a program.

In such a digital broadcasting receiving device to which a plurality of digital video recorders can be connected as a network, it is important that a function of the digital broadcasting receiving devices and functions of the various digital video recorders which are connected as a network are effectively utilized so as to try measures on how to improve user's convenience.

Jpn. Pat. Appln. KOKAI Publication No. 2004-153520 discloses a technique where a plurality of video recording/reproducing apparatuses are utilized, so that even in the case where one timer recording overlaps with another timer recording, a video recording/reproducing apparatus can record one program and another video recording/reproducing apparatus can record the other program.

Further, Jpn. Pat. Appln. KOKAI Publication No. 2003-348509 discloses a technique where program information and reservation information acquired by a broadcasting receiving device are transmitted to an information recording/reproducing apparatus, so that the information recording/reproducing apparatus effectively utilizes the program information and the reservation information and can execute a timer recording process or the like.

Further, Jpn. Pat. Appln. KOKAI Publication No. 2004-147340 discloses a technique where automatically acquired program information is used, so that a program selection and program recording reservation on a screen of the receiving device, automatic channel switching and automatic recording of a selected program, automatic creation of in-tape information of recorded program, or the like can be carried out.

The present invention is, therefore, devised in view of the above problems, and its object is to provide a video recording control device and a video recording control method that control an externally connected video recorder to select a program using a channel selecting function of the video recorder and record the program, so as to enable the video recorder to select another program by a self channel selecting function and improve user's convenience.

According to one aspect of the present invention, there is provided a video recording control device, comprising: an input section configured so that signals including a plurality of programs are input therein; a channel selecting section configured to select a predetermined program from the signals input into the input section; a connecting section configured to be connected to a plurality of video recorders having a channel selecting function; a video recorder selecting section configured to select a predetermined video recorder from the plurality of video recorders connected to the connecting section; a setting section configured to set video recording information for recording the predetermined program in the video recorder selected by the video recorder selecting section and enable the selected video recorder to record the program based on the video recording information; and a signal processing section configured to selectively reproduce the program recorded in the video recorder and the program selected by the channel selecting section.

According to another aspect of the present invention, there is provided a video recording control method comprising: a first step of selecting a predetermined video recorder from a plurality of video recorders having a channel selecting function; a second step of setting video recording information in the video recorder selected in the first step; and a third step in which the video recorder selected in the first step selects and records a program using the self channel selecting function based on the video recording information set in the second step.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a diagram illustrating one embodiment of the present invention and schematically explaining one example of a digital television broadcasting receiving device and a network system mainly composed of it;
FIG. 2 is a block constitutional diagram explaining a main signal processing system of the digital television broadcasting receiving device according to the embodiment;
FIG. 3 is an outline view explaining a remote controller of the digital television broadcasting receiving device according to the embodiment;
FIG. 4 is a flowchart explaining a part of a program specifying and recording operation in the digital television broadcasting receiving device according to the embodiment;
FIG. 5 is a flowchart explaining a residual part of the program specifying and recording operation in the digital television broadcasting receiving device according to the embodiment;
FIG. 6 is a diagram explaining one example of an electronic program listing displayed on the digital television broadcasting receiving device according to the embodiment;
FIG. 7 is a diagram explaining one example of a program specifying and reserving screen displayed on the digital television broadcasting receiving device according to the embodiment;
FIG. 8 is a diagram explaining one example of a video recorder setting screen displayed on the digital television broadcasting receiving device according to the embodiment;
FIG. 9 is a flowchart explaining a date and hour specifying and recording operation of the digital television broadcasting receiving device according to the embodiment;
FIG. 10 is a diagram explaining one example of a date and hour specifying and reserving screen displayed on the digital television broadcasting receiving device according to the embodiment;
FIG. 11 is a diagram explaining another example of the video recorder setting screen displayed on the digital television broadcasting receiving device according to the embodiment;
FIG. 12 is a flowchart explaining an operation according to another embodiment of the present invention;
FIG. 13 is a flowchart explaining one example of an operation when extension of a program is recognized according to another embodiment; and
FIG. 14 is a flowchart explaining another example of the operation when extension of a program is recognized according to another embodiment.

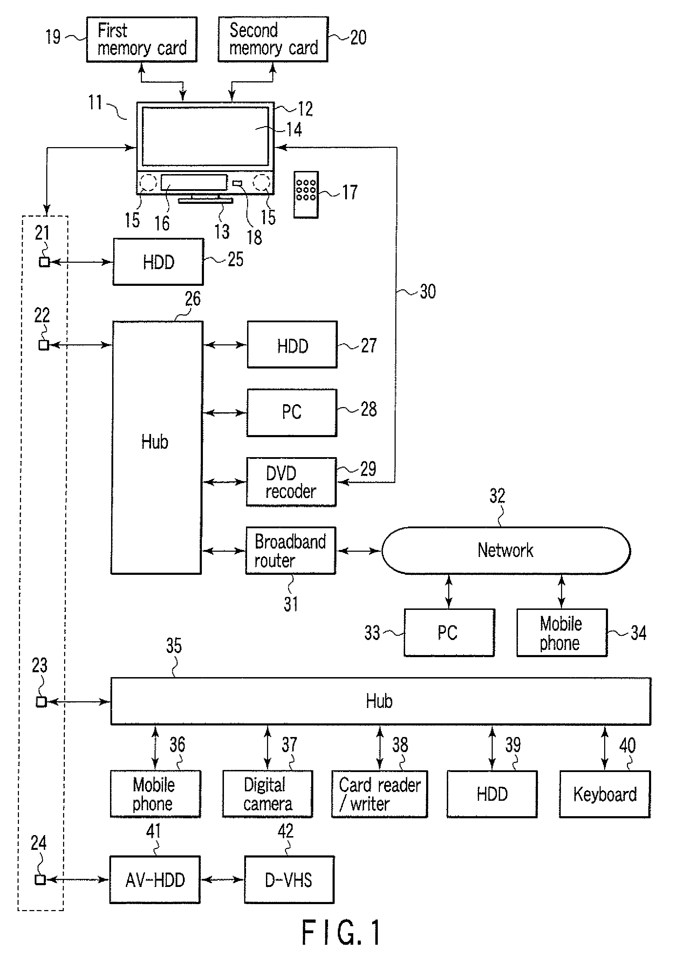

One embodiment of the present invention is explained in detail below with reference to the drawings. FIG. 1 schematically illustrates an outline of a digital television broadcasting receiving device 11 explained in this embodiment and one example of a network system mainly composed of the digital television broadcasting receiving device 11.

That is, the digital television broadcasting receiving device 11 is mainly composed of a thin type cabinet 12 and a supporting stand 13 that supports the cabinet 12 in a standing position. The cabinet 12 is provided with a flat panel type image display 14 composed of a liquid crystal display panel or the like, a speaker 15, an operating section 16, a light receiving section 18 that receives operation information transmitted from a remote controller 17, and the like.

A first memory card 19 such as a secure digital (SD) memory card, a multimedia card (MMC) or a memory stick can be attached/detached to/from the digital television broadcasting receiving device 11. Information such as a program and a picture can be recorded/reproduced in/from the first memory card 19.

Further, a second memory card (IC card) 20 in which contract information or the like is recorded can be attached/detached to/from the digital television broadcasting receiving device 11. Information is recorded/reproduced in/from the second memory card 20.

Further, the digital television broadcasting receiving device 11 has a first local area network (LAN) terminal 21, a second LAN terminal 22, a USB (universal serial bus) terminal 23 and an i.Link terminal 24.

The first LAN terminal 21 is used as an HDD exclusive port compatible with LAN, and is used in order to record/reproduce information via Ethernet (registered trademark) in/from an HDD 25 compatible with LAN which is a connected NAS (network attached storage).

When the first LAN terminal 21 as the HDD exclusive port compatible with LAN is provided, information about a program with hi-vision image quality can be recorded stably into the HDD 25 without being influenced by another network environment, network use condition and the like.

Further, the second LAN terminal 22 is used as a general LAN-compatible port using Ethernet (registered trademark), and is connected with a device such as an LAN compatible HDD 27, a personal computer (PC) 28, a DVD (digital versatile disk) recorder 29 containing HDD or the like via, for example, a hub 26 so as to be used for transmitting information to these devices.

Since digital information to be communicated via the second LAN terminal 22 is information only about a control system, it is necessary to provide an exclusive analog transmission path 30 to the DVD recorder 29 in order to transmit an analog image and sound information between the DVD recorder 29 and the digital television broadcasting receiving device 11.

Further, the second LAN terminal 22 is connected to a network 32 such as internet via a broadband router 31 connected to the hub 26, and is used for transmitting information to a PC 33, a mobile phone 34 or the like via the network 32.

The USB terminal 23 is used as a general USB compatible port. The USB terminal 23 is connected to an USB device such as a mobile phone 36, a digital camera 37, a reader/writer 38 for a memory card, an HDD 39 or a keyboard 40 via a hub 35, for example, and is used for transmitting information to the USB devices.

Further, the i.Link terminal 24 is serially connected to an AV-HDD 41, a D (digital)-VHS (video home system) 42 or the like, and is used for transmitting information to these devices.

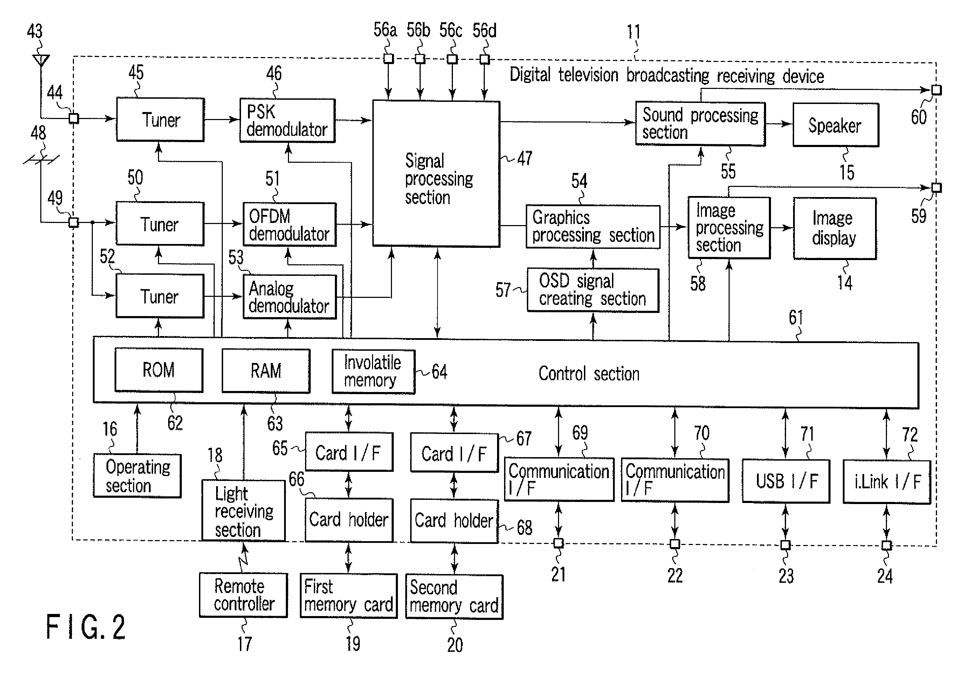

FIG. 2 illustrates a main signal processing system of the digital television broadcasting receiving device 11. That is, a satellite digital television broadcasting signal which is received by an antenna 43 for receiving BS/CS digital broadcasting is supplied to a tuner 45 for satellite digital broadcasting via an input terminal 44, so that a broadcasting signal of a desired channel is selected.

The broadcasting signal selected by the tuner 45 is supplied to a phase shift keying (PSK) demodulator 46, and it is demodulated into digital image signal and sound signal so as to be output to a signal processing section 47.

Further, a terrestrial digital television broadcasting signal which is received by an antenna 48 for receiving ground-based broadcasting is supplied to a tuner 50 for terrestrial digital broadcasting via an input terminal 49, so that a broadcasting signal of a desired channel is selected.

The broadcasting signal which is selected by the tuner 50 is supplied to an orthogonal frequency division multiplexing (OFDM) demodulator 51, and it is demodulated into digital image signal and sound signal so as to be output to the signal processing section 47.

Further, a terrestrial analog television broadcasting signal which is received by the antenna 48 for receiving ground-based broadcasting is supplied to a tuner 52 for terrestrial analog broadcasting via the input terminal 49, so that a broadcasting signal of a desired channel is selected. The broadcasting signal selected by the tuner 52 is supplied to an analog demodulator 53 and is demodulated into analog image signal and sound signal so as to be output to the signal processing section 47.

The signal processing section 47 selectively gives a predetermined digital signal process to the digital image signal and sound signal supplied from the PSK demodulator 46 and the OFDM demodulator 51 so that the signals are output to a graphic processing section 54 and a sound processing section 55.

Further, the signal processing section 47 is connected to a plurality (four in the drawing) of input terminals 56a, 56b, 56c and 56d. The analog image signal and sound signal can be input from the outside of the digital television broadcasting receiving device 11 into the input terminals 56a to 56d.

The signal processing section 47 selectively digitalizes the analog image signal and sound signal supplied from the analog demodulator 53 and the input terminals 56a to 56d, and gives a predetermined digital signal process to the digitalized image signal and sound signal. Thereafter, the signal processing section 47 outputs the processed signals to the graphic processing section 54 and the sound processing section 55.

The graphic processing section 54 has a function for superposing an OSD signal generated by an on-screen display (OSD) signal generating section 57 on a digital image signal supplied from the signal processing section 47 so as to output it. The graphic processing section 54 can selectively output an output image signal of the signal processing section 47 and an output OSD signal of the OSD signal generating section 57, or can output them so that both the outputs compose a half of the screen, respectively.

The digital image signal output from the graphic processing section 54 is supplied to an image processing section 58. After the image processing section 58 converts the input digital image signal into an analog image signal with a format which can be displayed on the image display 14, it outputs the analog image signal to the image display 14 so that the image is displayed and is led to the outside via an output terminal 59.

After the sound processing section 55 converts the input digital sound signal into an analog sound signal with a format which can be reproduced in the speaker 15, it outputs the analog sound signal to the speaker 15 so that the sound is reproduced and is led to the outside via an output terminal 60.

All the operations including the above-mentioned various receiving operations in the digital television broadcasting receiving device 11 are panoptically controlled by a control section 61. The control section 61 contains a central processing unit (CPU) and the like. The control section 61 receives operation information from the operating section 16, or receives operation information transmitted from the remote controller 17 via the light receiving section 18, and controls the respective sections so that the operation contents are reflected.

In this case, the control section 61 utilizes a read only memory (ROM) 62 which stores control programs to be executed by a CPU therein, a random access memory (RAM) 63 which provides an operation area to the CPU, and an involatile memory 64 which stores various setting information, control information and the like therein.

The control section 61 is connected to a card holder 66 to which the first memory card 19 can be attached via a card I/F (interface) 65. As a result, the control section 61 can transmit information to the first memory card 19 attached to the card holder 66 via the card I/F 65.

Further, the control section 61 is connected to a card holder 68 to which the second memory card 20 can be attached via a card I/F 67. As a result, the control section 61 can transmit information to the second memory card 20 attached to the card holder 68 via the card I/F 67.

The control section 61 is connected to the first LAN terminal 21 via a communication I/F 69. As a result, the control section 61 can transmit information to the LAN compatible HDD 25 connected to the first LAN terminal 21 via the communication I/F 69. In this case, the control section 61 has a DHCP (dynamic host configuration protocol) server function, and allocates an IP (internet protocol) address to the LAN compatible HDD 25 connected to the first LAN terminal 21 so as to control it.

Further, the control section 61 is connected to the second LAN terminal 22 via a communication I/F 70. As a result, the control section 61 can transmit information to the respective devices (see FIG. 1) connected to the second LAN terminal 22 via the communication I/F 70.

The control section 61 is connected to the USB terminal 23 via an USB I/F 71. As a result, the control section 61 can transmit information to the respective devices (see FIG. 1) connected to the USB terminal 23 via the USB I/F 71.

Further, the control section 61 is connected to the i.Link terminal 24 via an i.Link I/F 72. As a result, the control section 61 can transmit information to the respective devices (see FIG. 1) connected to the i.Link terminal 24 via the i.Link I/F 72.

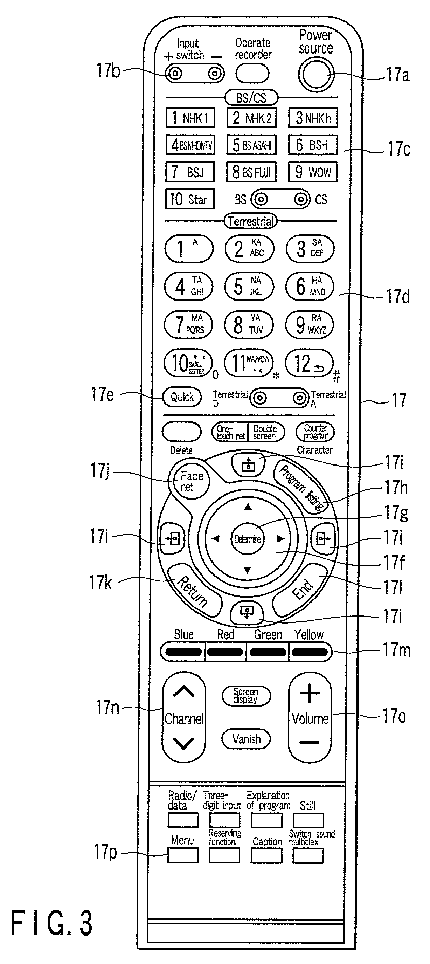

FIG. 3 illustrates an outline of the remote controller 17. The remote controller 17 is mainly provided with a power source key 17a, an input switching key 17b, a direct channel selecting key 17c for satellite digital broadcasting channels, a direct channel selecting key 17d for terrestrial broadcasting channels, a quick key 17e, a cursor key 17f, a determination key 17g, a program listing key 17h, a page switching key 17i, a face net (navigation) key 17j, a return key 17k, an end key 171, blue, red, green and yellow color keys 17m, a channel up/down key 17n, a volume adjusting key 17o, a menu key 17p and the like.

The digital television broadcasting receiving device 11 specifies a digital video recorder (for example, AV-HDD 41, D-VHS 42 or the like) which contains a tuner, namely, a broadcasting receiving function from the devices connected to the terminals 21 to 24, and allows the tuner of the specified digital video recorder to select a desired program so as to digitally record the program.

This video recording function includes two types of functions: a program specifying and recording function for specifying and recording a program which is planned to be broadcasted; and a date and hour specifying and recording function for specifying and recording a channel, and hour and date.

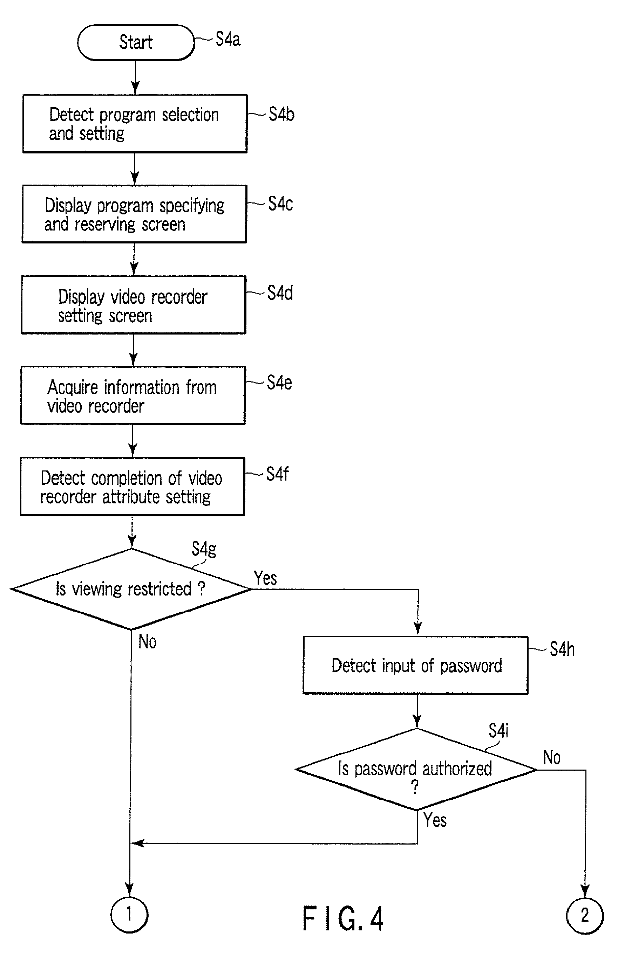

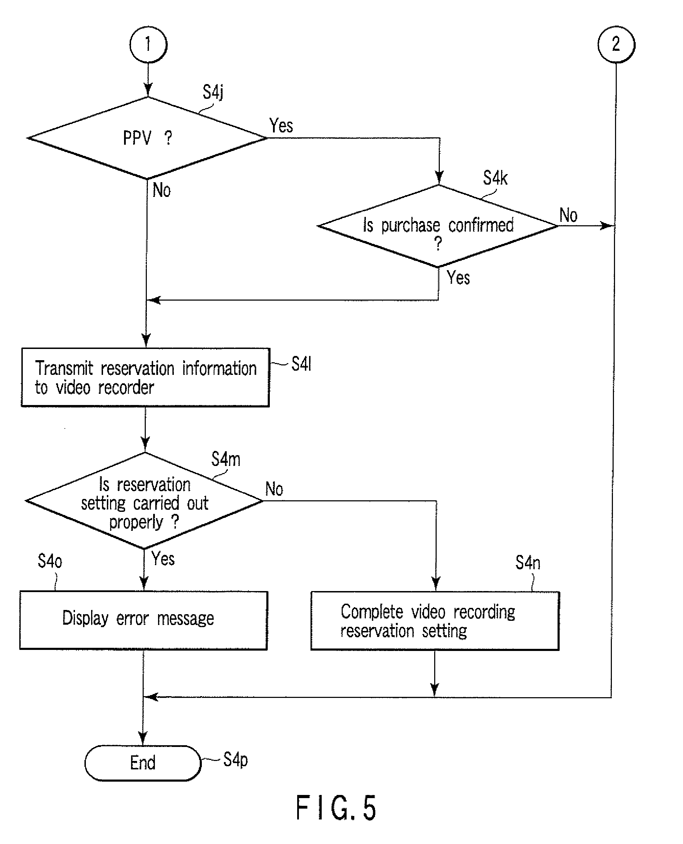

FIGS. 4 and 5 illustrate flowcharts explaining the program specifying and recording operation. This operation is started (step S4a) when a user operates the program listing key 17h of the remote controller 17.

As a result, the control section 61 creates an electronic program listing based on EPG (electronic program guide) information as program information acquired via a broadcasting signal, a network or the like in advance, and displays a part of it on the image display 14.

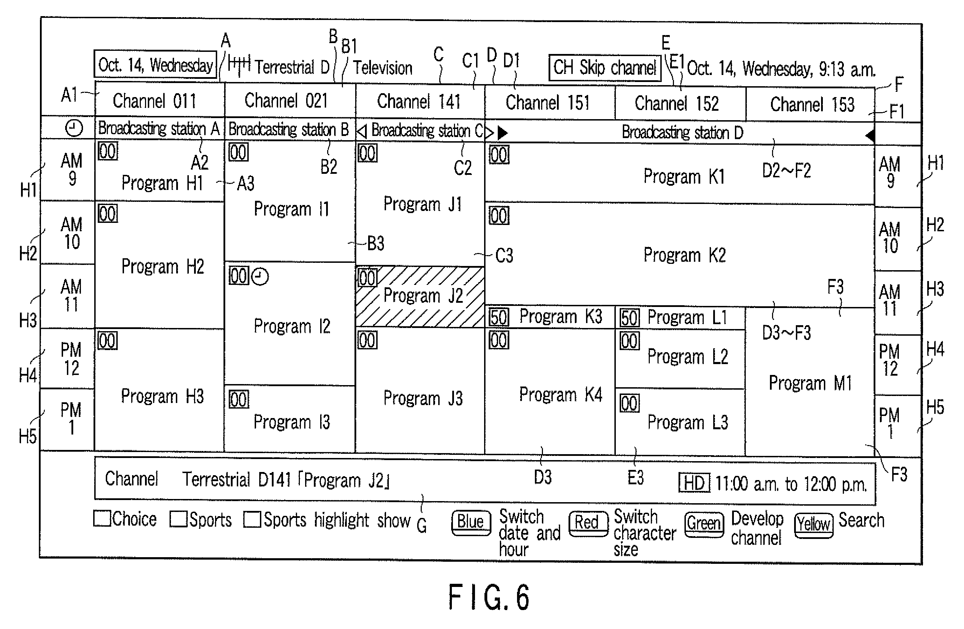

FIG. 6 illustrates one example of the electronic program listing displayed on the image display 14. In this electronic program listing, six broadcasting stations (channels) are arranged in a horizontal direction, and time frames for 5 hours are arranged in a vertical direction so that programs are displayed.

This electronic program listing can be selectively scrolled to up-down and right-left directions by operating cursor key 17f of the remote controller 17. Further, when the page switching key 17i of the remote controller 17 is operated, the electronic program listing for one screen can be selectively skipped to the up-down and right-left directions.

That is, the electronic program listing has display fields A to F corresponding to the six broadcasting stations (channels), and the display fields A to F are composed of channel number display areas A1 to F1, broadcasting station name display areas A2 to F2, and program display areas A3 to F3.

In this case, for example as shown in the display fields D to F, in the case one broadcasting station has a plurality of channel numbers (in the drawing, three), the three broadcasting station name display areas D2 to F2 are used as one common broadcasting station name display area.

Further, at the slot where one broadcasting station broadcasts one program using a plurality of channels (in the drawing, three), namely, an event is shared, the three program display areas D3 to F3 are used as one common program display area.

Further, in electronic program listing, a selected program display area G showing a channel number, a title, broadcasting time and the like selected by the cursor key 17f of the remote controller 17 is provided below the six display fields A to F.

In this case, the selected program is displayed in the display fields A to F so that the display area of that program has a different color from that of the display areas of the other programs, but in FIG. 6, the selected program is displayed by hatching.

In this electronic program listing, five time areas H1 to H5 showing time frames for each hour at right and left portions in the up-down direction. In FIG. 6, since current time is 9:13 a.m., a state that the time areas H1 to H5 correspond to 9:00 a.m. to 1:00. p.m. is shown. When the current time is 10:00 a.m., a changeover is made so that the time areas H1 to H5 correspond to 10:00 a.m. to 2:00 p.m.

The user can selectively set a desired program from the electronic program listing displayed as mentioned above. This selective setting is made by operating the cursor key 17f of the remote controller 17 so as to select the desired program and operating the determination key 17g in step S4c.

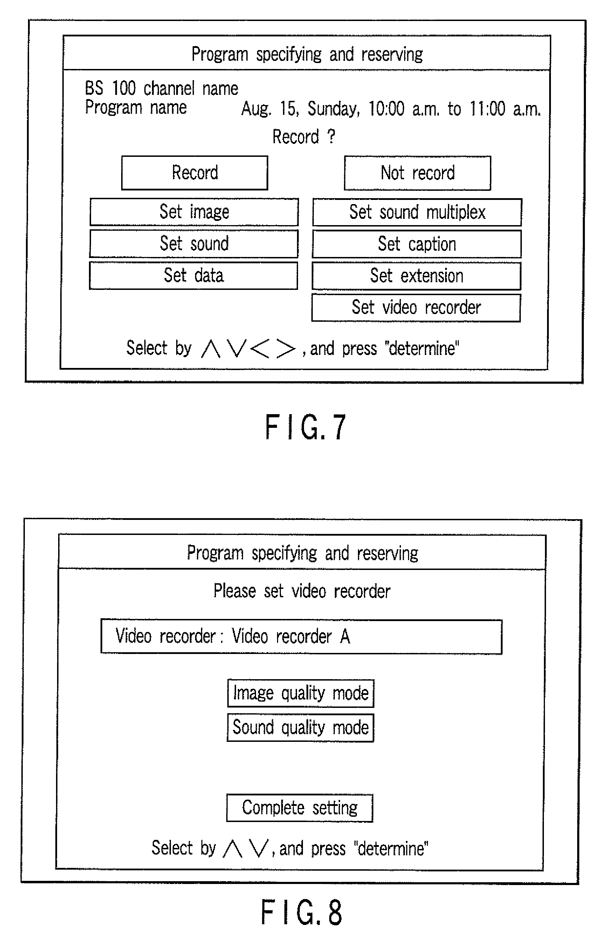

For this reason, when the control section 61 detects that the desired program is selectively set from the electronic program listing in step S4b, it displays a program specifying and reserving screen shown in FIG. 7 in step S4c.

On this program specifying and reserving screen, a channel, a program title, broadcasting date and hour and the like of the program selectively set by the user from the electronic program listing are displayed. Further, items for selecting "record" or "not record" the program, items for setting various attribute information such as "set image", "set sound", "set data", "set sound multiplex", "set caption" and "set extension", and items "set video recorder" for specifying a video recorder are displayed.

When the item "record" is selectively set, various attributes are determined and the item "set video recorder" is selectively set on the program specifying and reserving screen, the control section 61 displays a video recorder setting screen shown in FIG. 8 in step S4d.

When a video recorder is set on the video recorder setting screen, the control section 61 refers to the set video recorder so as to acquire information about the video recorder in step S4e, and displays items for setting attribute information (image quality mode, sound quality mode and the like) which can be set in the video recorder on the video recorder setting screen.

When the control section 61 detects that the setting of the various attribute information about the video recorder is completed and the item "end setting" is selectively set in step S4f, it determines whether the program selectively set from the electronic program listing (the program which is requested to be recorded) has viewing restriction in step S4g.

When the determination is made that viewing is restricted (YES), the user operates the remote controller 17 and can input a password for canceling the viewing restriction. For this reason, when the control section 61 detects that the user inputs the password in step S4h, it determines whether the password is authorized in step S4i. When the control section 61 determines that the password is not authorized (NO), it ends the process (step S4p).

When the control section 61 determines that the password is authorized (YES) in step S4i or determines that the program selectively set from the electronic program listing has no viewing restriction (YES) in step S4g, it determines whether the program adopts a PPV (Pay Per View) system in step S4j.

When the control section 61 determines that the program adopts the PPV system (YES), the user operates the remote controller 17, and can purchase the program. For this reason, the control section 61 determines whether the purchase of the program is confirmed in step S4k, and when the purchase is not confirmed (NO), it ends the process (step S4p).

When the determination is made that the program does not adopt the PPV system in step S4j (NO) or the purchase is confirmed (YES) in step S4k, the control section 61 transmits recording reservation information including the channel, the program title, the broadcasting date and hour of the program selectively set by the user from the electronic program listing in advance, various attribute information about the program, and the attribute information about the video recorder set on the video recorder setting screen to the video recorder set on the video recorder setting screen in step S41.

Thereafter, the control section 61 refers to the video recorder in step S4m so as to determine whether the video recorder completes the reservation setting based on the video recording reservation information. When the determination is made that the reservation setting is not properly carried out (NO), the control section 61 displays an error message as warning representing that on the image display 14 in step S4n, and ends the process (step S4p).

Further, when the determination is made that the reservation setting is properly carried out on the video recorder in step S4m (YES), the control section 61 completes the video recording reservation setting in a specified video recorder in step S4o, and ends the process (step S4p).

When the video recording reservation is set in the specified video recorder and the reservation time comes, the reserved program is selected by the tuner of the video recorder so as to be digitally recorded automatically.

According to the above embodiment, since a program is selected and recorded in the externally connected video recorder by using the channel selecting function of the video recorder, the digital television broadcasting receiving device 11 can select another program using its self channel selecting function, so that user's convenience can be improved.

The control section 61 acquires program information about terrestrial analog broadcasting distributed via a network or the like, and can allow the user to select a desired program from an electronic program listing created based on the program information and specify and reserve the program.

In this case, a video recorder containing an analog broadcasting compatible tuner is specified, and when the reservation time comes, the reserved program is selected by the tuner of the video recorder so as to be automatically recorded.

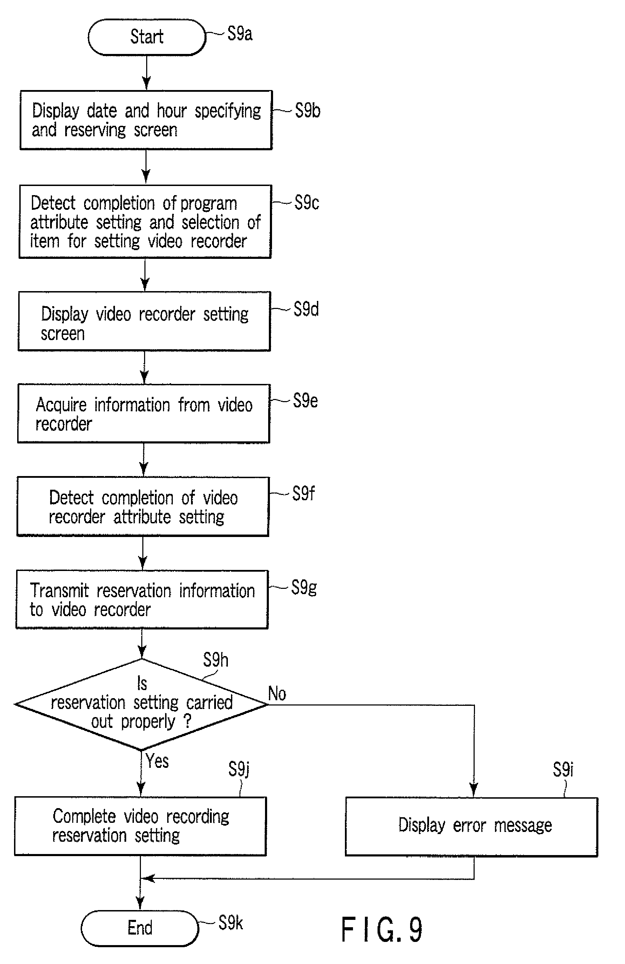

FIG. 9 is a flowchart for explaining the date and hour specifying and recording operation. This operation is started (step S9a) when the user operates the menu key 17p of the remote controller 17 so as to allow a setting menu to be displayed on the image display 14.

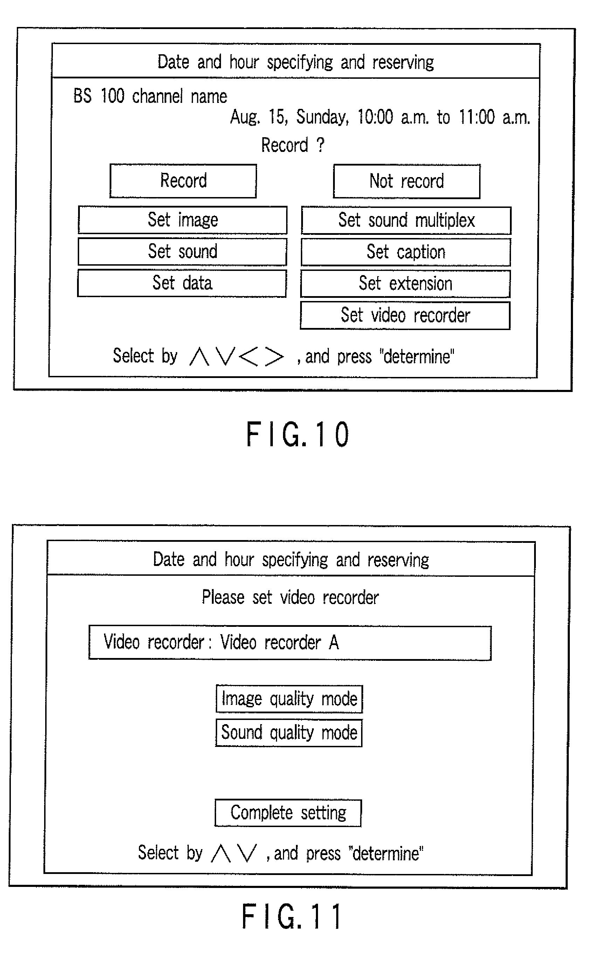

When the control section 61 detects that the user selectively sets the item of the date and hour specifying and reserving from the hierarchy of the setting menu, it displays a date and hour specifying and reserving screen shown in FIG. 10 in step S9b.

On the date and hour specifying and reserving screen, the user can set a channel, and date and hour. Further, items for selecting "record" or "not record" broadcasting at the specified channel and the date and hour, items for setting various attribute information such as "set image", "set sound", "set data", "set sound multiplex" and "set caption", and an item "set video recorder" for specifying a video recorder and the like are displayed on the date and hour specifying and reserving screen.

When the control section 61 detects that the item "record" is selectively set on the date and hour specifying and reserving screen, the various attributes are determined, and that the item "set video recorder" is selectively set in step S9c, it displays a video recorder setting screen shown in FIG. 11 in step S9d.

When the video recorder is set on the video recorder setting screen, the control section 61 refers to the set video recorder so as to acquire information about the video recorder, and displays items for setting attribute information (image quality mode, sound quality mode and the like) which can be set in the video recorder on the video recorder setting screen in step S9e.

The control section 61 detects that the setting of various attribute information about the video recorder is completed and the item "complete setting" is selectively set in step S9f, it transmits video recording reservation information including the channel and the date and hour set by the user in advance, the set various attribute information and the attribute information about the video recorder set on the video recorder setting screen to the video recorder set on the video recorder setting screen in step S9g.

Thereafter, the control section 61 refers to the video recorder so as to determine whether the video recorder completes the reservation setting based on the video recording reservation information in step S9n. When the determination is made that the reservation setting is not properly carried out (NO), the control section 61 displays an error message as warning representing that on the image display 14 in step S9i, and ends the process (step S9k).

Further, when the determination is made that the reservation setting is properly carried out in the video recorder in step S9h (YES), the control section 61 completes the video recording reservation setting in the specified video recorder in step S9j, and ends the process (step S9k).

When the video recording reservation is set in the specified video recorder in such a manner and the reservation time comes, broadcasting at the reserved channel and the date and hour is selected by the tuner of the video recorder so as to be digitally recorded automatically.

Since broadcasting at a channel and date and hour specified is selected and recorded in the video recorder by using the channel selecting function of an externally connected video recorder by the operation shown in FIG. 9, the digital television broadcasting receiving device 11 can select another program using its channel selecting function, so that user's convenience can be improved.

Further, in the case where a channel and date and hour of analog broadcasting are specified so that video recording is reserved and a video recorder containing an analog broadcasting compatible tuner is specified, when the reservation time comes, the analog broadcasting at the reserved channel and the date and hour is selected by the tuner of the video recorder so as to be recorded automatically.

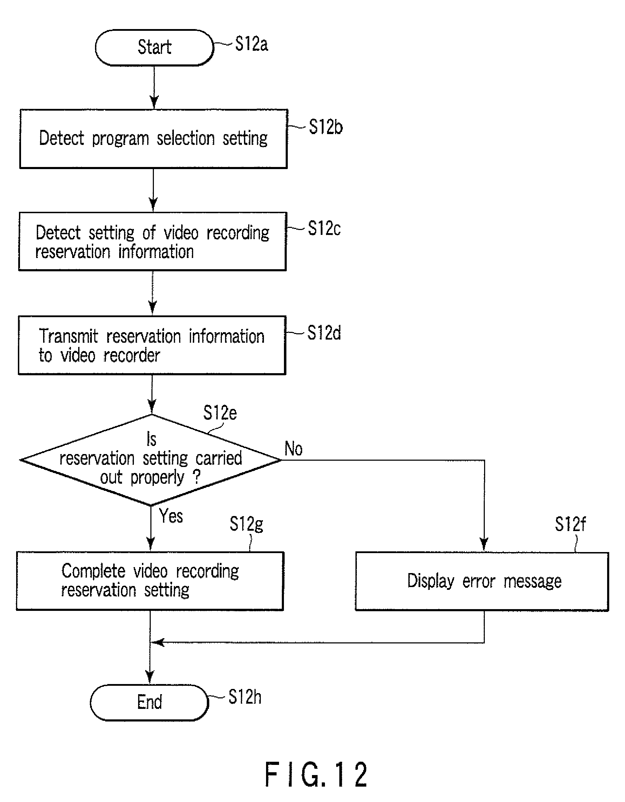

FIG. 12 is a flowchart for explaining another embodiment of the present invention. The above embodiment explains that the video recorder where reservation is set records a program selected by its self tuner, but another embodiment explained below explains an operation where the digital television broadcasting receiving device 11 selects a channel by means of its self tuners 45, 50 and 52, and records an analog image signal and an analog sound signal output from the output terminals 59 and 60 in a video recorder where reservation is set (for example, DVD recorder 29 or the like).

This is a content that instructs the video recorder to extend the video recording time when the video recorder is in a video recording waiting state where reservation is set, or the control section 61 recognizes the extension of program from the acquired EPG information during the execution of the video recording.

That is, this operation is started (step S12a) when the user operates the program listing key 17h of the remote controller 17 and allows an electronic program listing to be displayed on the image display 14.

When the control section 61 detects that a desired program is selectively set from the electronic program listing in step S12b, it displays the program specifying and reserving screen shown in FIG. 7. On the program specifying and reserving screen as described-above, the channel, the title, the date and hour and the like of the program selectively set by the user from the electronic program listing are displayed. Further on this screen, the items for selecting "record" or "not record" the program, the items for setting the various attribute information such as "set image", "set sound", "set data", "set sound multiplex", "set caption", and "set extension", and the item "set video recorder" for specifying a video recorder are displayed. The item "set extension" is for setting whether the video recording copes with extension when the program is extended.

When the item "record" is selectively set, the various attributes are determined and the item "set video recorder" is selectively set on the program specifying and reserving screen, the control section 61 displays the video recorder setting screen shown in FIG. 8.

When a video recorder is set on the video recorder setting screen, the control section 61 refers to the set video recorder so as to acquire information about the video recorder, and displays items for setting attribute information (image quality mode, sound quality mode an the like) which can be set in the video recorder on the video recorder setting screen.

When the control section 61 detects that video recording reservation information including the channel, the title, and the date and hour of the program selectively set by the user from the electronic program listing in advance, the various attribute information about the program and the attribute information about the video recorder set on the video recorder setting screen are set, it transmits the video recording reservation information to the video recorder set on the video recorder setting screen in step S12d.

Thereafter, the control section 61 refers to the video recorder so as to determine whether the video recorder completes the reservation setting based on the video recording reservation information in step S12e. When the determination is made that the reservation setting is not properly carried out (NO), the control section 61 displays an error message as warning representing that on the image display 14 in step S12f, and ends the process (step S12h) .

Further, when the determination is made that the reservation setting is properly carried out in the video recorder in step S12e (YES), the control section 61 completes the video recording reservation setting in the specified video recorder in step S12g, and ends the process (S12h).

When the video recording reservation is set in the specified video recorder and the reservation time comes, the analog image signal and the analog sound signal of the program selected by the tuners 45, 50 and 52 of the digital television broadcasting receiving device 11 are supplied from the output terminals 59 and 60 to the video recorder (DVD recorder 29) via the analog transmission path 30.

At this time, the video recorder starts the video recording operation for the analog image and sound signals output from the digital television broadcasting receiving device 11 based on the video recording reservation information so as to record the signals.

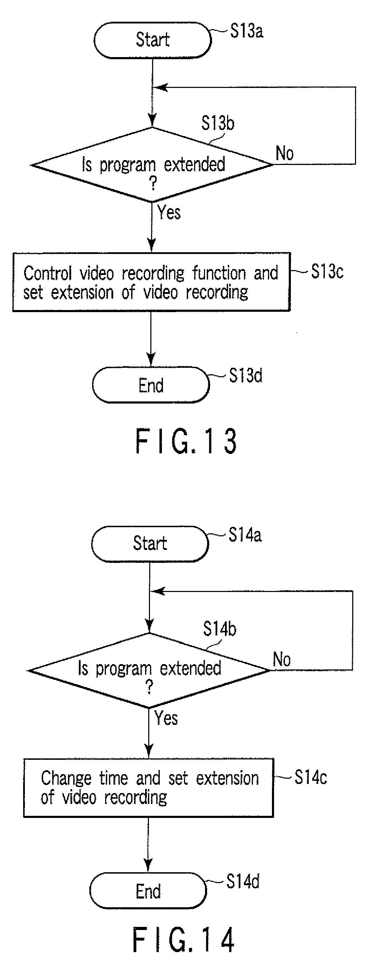

FIGS. 13 and 14 are flowcharts for explaining operations when the video recorder is in the video recording waiting state where the reservation is set and when the control section 61 recognizes extension of the program based on the acquired EPG information during the execution of the video recording.

In FIG. 13, this operation is started when the video recorder is in the video recording waiting state or during the execution of the video recording (step S13a). When the control section 61 recognizes the extension of the program based on the EPG information in step S13b, it instructs the video recording function mounted into the video recorder to execute an extension recording command in step S13c. That is, the control section 61 controls the video recording function of the video recorder so as to set the extension of the video recording, and ends the process (step S13d) .

In FIG. 14, this operation is started (step S14a) when the video recorder is in the video recording waiting state or during the execution of the video recording. When the control section 61 recognizes the extension of the program based on the EPG information in step S14b, it instructs the video recorder about end time or the like for the extension of the program. That is, the control section 61 changes the time set in the video recorder so as to set the extension of the video recording, and ends the process (step S14d).

With such operations, the video recorder can automatically cope with the extension of the program in the video recording waiting state or during the execution of the video recording, so that user's convenience can be improved.

The present invention is not limited to the above embodiments, and the components can be variously changed and concretized at the stage where the present invention is carried out without departing from the scope of the gist. Further, a plurality of components disclosed in the above embodiments are suitably combined so that various inventions can be formed. For example, some components may be deleted from all the components in the embodiments. Further, components in different embodiments may be suitably combined.

## Claims

1. A video recording control device, **characterized by** comprising:
an input section (44, 49) configured so that signals including a plurality of programs are input therein;
a channel selecting section (45, 50, 52) configured to select a predetermined program from the signals input into the input section (44, 49);
a connecting section (22, 24) configured to be connected to a plurality of video recorders (29, 41, 42) having a channel selecting function;
a video recorder selecting section (17, 61) configured to select a predetermined video recorder (29, 41, 42) from the plurality of video recorders (29, 41, 42) connected to the connecting section (22, 24);
a setting section (17, 61) configured to set video recording information for recording the predetermined program in the video recorder (29, 41, 42) selected by the video recorder selecting section (17, 61) and enable the selected video recorder (29, 41, 42) to record the program based on the video recording information; and
a signal processing section (46, 47, 51, 53) configured to selectively reproduce the program recorded in the video recorder (29, 41, 42) and the program selected by the channel selecting section (45, 50, 52).

2. A video recording control device according to claim 1, **characterized in that**
the setting section (17, 61) comprises:
an acquiring section (47, 61) configured to acquire program information;
a program listing creating section (57, 61) configured to create an electronic program listing based on the program information acquired by the acquiring section (47, 61);
a display section (14) configured to display the electronic program listing created by the program listing creating section (57, 61);
a program selecting section (17) configured to select a predetermined program from the electronic program listing displayed on the display section (14);
a video recording information creating section (61) configured to create the video recording information including information for specifying the program selected by the program selecting section (17); and
a video recording information setting section (61) configured to transmit the video recording information created by the video recording information creating section (61) to the video recorder (29, 41, 42) selected by the video recorder selecting section (17, 61) and set the video recording information.

3. A video recording control device according to claim 2, **characterized in that** the setting section (17, 61) is configured to set the video recording information for causing the video recorder (29, 41, 42) selected by the video recorder selecting section (17, 61) to select and record the program using the self channel selecting function.

4. A video recording control device according to claim 3, **characterized in that**
the video recording information creating section (61) comprises:
a program attribute setting section (17, 61) configured to set attribute information about the program selected by the program selecting section (17); and
a video recording attribute setting section (17, 61) configured to set attribute information about the video recorder (29, 41, 42) selected by the video recorder selecting section (17, 61), and
the video recording information creating section (17, 61) creates the video recording information including respective pieces of the attribute information set by the program attribute setting section (17, 61) and the video recorder attribute setting section (17, 61).

5. A video recording control device according to claim 3, **characterized by** further comprising a password input section (17, 61) configured to input a password for canceling viewing restriction when the program selected by the program selecting section (17) has viewing restriction.

6. A video recording control device according to claim 3, **characterized by** further comprising an operating section (17) configured to perform an operation for purchasing the program when the program selected by the program selecting section (17) is a purchase program.

7. A video recording control device according to claim 3, **characterized in that** the setting section (17, 61) comprises:
a date and hour setting section (17, 61) configured to set a channel, and date and hour;
a video recording information creating section (61) configured to create the video recording information including the channel and the date and hour set by the date and hour setting section (17, 61); and
a video recording information setting section (61) configured to transmit the video recording information created by the video recording information creating section (61) to the video recorder (29, 41, 42) selected by the video recorder selecting section (17, 61) and set the video recording information.

8. A video recording control device according to claim 7, **characterized in that**
the video recording information creating section (61) comprises:
a program attribute setting section (17, 61) configured to set attribute information about the program related to the channel and the date and hour set by the date and hour setting section (17, 61); and
a video recorder attribute setting section (17, 61) configured to set attribute information about the video recorder (29, 41, 42) selected by the video recorder selecting section (17, 61), and
the video recording information creating section is configured to create the video recording information including the various pieces of attribute information set by the program attribute setting section (17, 61) and the video recorder attribute setting section (17, 61) .

9. A video recording control device according to claim 2, **characterized in that** the setting section (17, 61) is configured to set the video recording information for causing the video recorder (29, 41, 42) selected by the video recorder selecting section (17, 61) to record the program selected by the channel selecting section (45, 50, 52).

10. A video recording control device according to claim 9, **characterized in that** the setting section (17, 61) comprises a generating section (61) configured to generate information for changing video recording time in the video recorder (29, 41, 42) when a change in time of a program included in the video recording information set in the video recorder (29, 41, 42) selected by the video recorder selecting section (17, 61) is detected based on the program information acquired by the acquiring section (47, 61).

11. A video recording control method **characterized by** comprising:
a first step (S4d) of selecting a predetermined video recorder (29, 41, 42) from a plurality of video recorders (29, 41, 42) having a channel selecting function;
a second step (S41, S9g) of setting video recording information in the video recorder (29, 41, 42) selected in the first step (S4d); and
a third step (S4o) in which the video recorder (29, 41, 42) selected in the first step (S4d) selects and records a program using the self channel selecting function based on the video recording information set in the second step (S41, S9g).

12. A video recording control method according to claim 11, **characterized in that** the second step (S41, S9g) comprises:
a step (47, 61) of acquiring program information;
a step (57, 61) of creating an electronic program listing based on the acquired program information;
a step (14) of displaying the created electronic program listing;
a step (S4b) of selecting a predetermined program from the displayed electronic program listing;
a step (S4c, S4e, S4f) of creating the video recording information including information for specifying the selected program; and
a step (S41) of transmitting the created video recording information to the video recorder (29, 41, 42) selected in the first step (S4d) and setting the video recording information.

13. A video recording control method according to claim 11, **characterized in that** the second step (S9g) comprises:
a step (S9b) of setting a channel, and date and hour;
a step (S9c to S9f) of creating the video recording information including the set channel, and date and hour; and
a step (S9g) of transmitting the created video recording information to the video recorder (29, 41, 42) selected in the first step (S4d) and setting the video recording information.
